# EUROPEAN PATENT SPECIFICATION

(11) **EP 3 650 198 B1**
(45) Date of publication and mention of the grant of the patent: **29.03.2023**
(21) Application number: 18204564.1
(22) Date of filing: 06.11.2018
(51) Int. Cl.: B29C 53/82

(54) **GUIDE PIN FOR MACHINE INSERTION OF PLASTIC OR RUBBER TUBES INTO SHAPING MOLD AND DEVICE**
FÜHRUNGSSTIFT ZUM MASCHINELLEN EINFÜHREN VON KUNSTSTOFF- ODER GUMMIROHREN IN DIE FORMGEBUNGSFORM UND VORRICHTUNG
BROCHE DE GUIDAGE POUR L'INSERTION MÉCANIQUE DE TUBES EN PLASTIQUE OU EN CAOUTCHOUC DANS UN MOULE DE FORMAGE ET DISPOSITIF

(43) Date of publication of application: 13.05.2020
(73) Proprietor: MSV SYSTEMS CZ s.r.o., 460 01 Liberec (CZ)
(72) Inventor: Belohlavek, Ondrej, 46022 Liberec (CZ); Tichy, David, 46303 Straz nad Nisou (CZ); Barvinek, Marek, 463 31 Chrastava (CZ)
(74) Representative: Musil, Dobroslav

(56) References cited:
- WO-A2-2014/143762
- DE-A1-102009 013 793
- FR-A1- 3 009 994

## Description

### Technical field

The invention relates to a guide mandrel used for machine insertion of plastic or rubber tubes into a shaping mold, the guide mandrel comprising a rigid rear portion and a flexible front end portion.

The invention also relates to a device for machine insertion of plastic or rubber tubes into a shaping mold with a guide mandrel which comprises a longitudinal frame, adapted to be fastened to end element of a 3D manipulator, and means for inserting the tube into a labyrinth.

### Background art

For the bending of plastic or rubber tubes, molds comprising a molding labyrinth, hereinafter referred to as "labyrinth", made of a durable material, into which a straight tube is pressed to be shaped and after passing through the furnace/steam molding process and after cooling, maintains the spatial shape of the labyrinth into which it was inserted at the beginning of the process. It is already during the insertion of the straight tube into the spatially shaped labyrinth that the initially straight tube is subjected to bending or twisting or other stresses. So as to avoid undesirable deformations of the tube cross-section when inserting the straight plastic or rubber tube into the labyrinth, such as slumps or depressions in the tube wall in the bends, or other unwanted deformations, a reinforcing elastic body is inserted into the tube cavity along the entire length of the tube, e.g., a spring which with its outer surface supports the inner wall of the tube pressed into the labyrinth, the elastic body being bent according to the shape of the labyrinth along with the shaped tube pressed into the labyrinth. After the shaping process of the tube and the stabilization of the form of the shaped tube, the inner elastic body of the shaped tube is pulled out, which requires considerable strength and also creates a risk of damage or deformation of the tube already formed. Another disadvantage, particularly in thin-walled tubes, is the risk of deformation of the surface of the shaped tube exactly according to the surface of the elastic body, e.g. a spring. Another disadvantage is that for each shaped tube one elastic body is required throughout the shaping of the tube, which also involves high financial, logistic and storage requirements of the process with the inserted elastic bodies. Last but not least, the step of inserting the elastic body into the tube and removing it from the tube is a phase in the process which should be omitted to shorten the working cycle (tact time).

DE 10 2009 013793 A1 describes mandrel which has segments, where the mandrel is transferable between a variable-shape condition and a dimensionally-stable condition. In the variable-shape condition, the segments are moved against each other. In the dimensionally-stable condition, the segments are not moved against each other. The segments as such are in principle rigid cylindrical short parts, which are provided with contact surfaces whose planes intersect each other. The segments are connected by a flexible connecting device. The mandrel has a tensioning device, which has a spring device for biasing the connecting device. The tensioning device controls the force of mutual pulling of the segments, so it controls frictional forces between the contact surfaces of the adjacent segments and it controls rigidity of set mutual position of the segments in dimensionally-stable condition of the mandrel and also rigidity of set shape of the whole flexible part of the mandrel in dimensionally-stable condition. The set shape of the flexible part of the mandrel can be changed only after releasing the tensioning device when the frictional forces between the contact surfaces of the adjacent segments drop and when the flexible part of mandrel completely loses ability to hold any shape and behaves as a "snake". The flexible part of the mandrel in DE 10 2009 013793 A1 is therefore not elastic.

WO 2014/143762 A2 describes method and device for control of bend of medical apparatus, e.g. endoscope.

FR 3 009 994 A1 describes device and method for inserting tubes or pipes wound on a spool into shaping mold, where the inserting device is provided with pushing rolls system and some of the rolls are spring mounted.

The aim of the invention is to eliminate or at least reduce the disadvantages of the background art.

### Principle of the invention

The aim of the invention is achieved by a guide mandrel for machine insertion of plastic or rubber tubes into a shaping mold, whose principle consists in that the flexible front end portion is formed by an elastic front end portion, whereby the guide mandrel is adapted to be mounted at its rear end in a device for automatic insertion of plastic or rubber tubes into the shaping mold.

The principle of the device for automatic insertion of straight plastic or rubber tubes into the mold is that on a frame is mounted at its rear end the guide mandrel of the shaped tube, which is adapted to put on the tube, whereby the guide mandrel is provided with an elastic front end portion adapted to maintain the presence of the mandrel in the tube at the bending point and to minimize the ovality of the bent tube, wherein the elastic front end portion of the guide mandrel is associated with an inserting pulley mounted on the frame, wherein at least one pair of guide pulleys are mounted on the frame along the sides of the guide mandrel in the area between the inserting pulley and the rear end of the guide mandrel.

The advantage of the present invention is to enable high-quality machine insertion of plastic or rubber tubes even into spatially complex 3D shaping molds - labyrinths, effectively preventing undue deformation of the tube cross-section, such as a slump or depression of the tube walls in the bends or other undesirable deformations, thereby eliminating the need to leave the inner mandrel in the tube throughout the molding process, as well as the need to remove the inner mandrel after shaping the tube and also eliminating the risk of damaging the shaped tube when removing the inner mandrel. The step of inserting an elastic body into each tube prior to insertion into the mold and removing the elastic body from each tube has been left out by the present invention and a further reduction in the working cycle is achieved. In thin-walled tubes, the risk of deformation of the shaped tube is virtually eliminated, precisely copying the surface of the inserted elastic body during the shaping process, i.e. during heating and subsequent cooling with the relaxation of internal stresses.

### Description of drawings

The invention is schematically represented in the drawing, where Fig. 1 shows a spatial view of an exemplary embodiment of a device for automatic insertion of plastic or rubber tubes into a shaping mold, Fig. 2 is a side view of the device with the first embodiment of the guide mandrel in longitudinal section and Fig. 3 shows the second embodiment of the guide mandrel in longitudinal section.

### Examples of embodiment

The invention will be described with reference to exemplary embodiments of a guide mandrel for machine insertion of plastic or rubber tubes into a shaping mold and an exemplary embodiment of a device for automatic insertion of straight plastic or rubber tubes into the shaping mold - the labyrinth.

The device for automatic insertion of straight plastic or rubber tubes into the shaping mold - the labyrinth - comprises a longitudinal frame **1** which is adapted to be fastened to the end element of a 3D manipulator (not shown). In the illustrated embodiment, the frame **1** for fastening to the end element of the 3D manipulator (not shown) has a clamping projection **10** on the upper side of the front portion of the frame **1**. In an unillustrated exemplary embodiment, the clamping projection **10** is provided on a different part of the frame **1,** or is formed by another suitable method.

On the lower side of the frame **1** a guide mandrel (pin) **6** of the shaped tube **3** is mounted at its rear end **61,** the guide mandrel **6** being located in the direction of the frame **1** length towards the front end **11** of the frame **1,** where the guide mandrel **6** is provided with an elastic front end portion **60,** adapted to maintain the presence of the mandrel **6** in the tube **3** at the bending point and to minimize the ovality of the bent tube **3,** or minimizing slumps or depressions of the tube material **3** in the bending region.

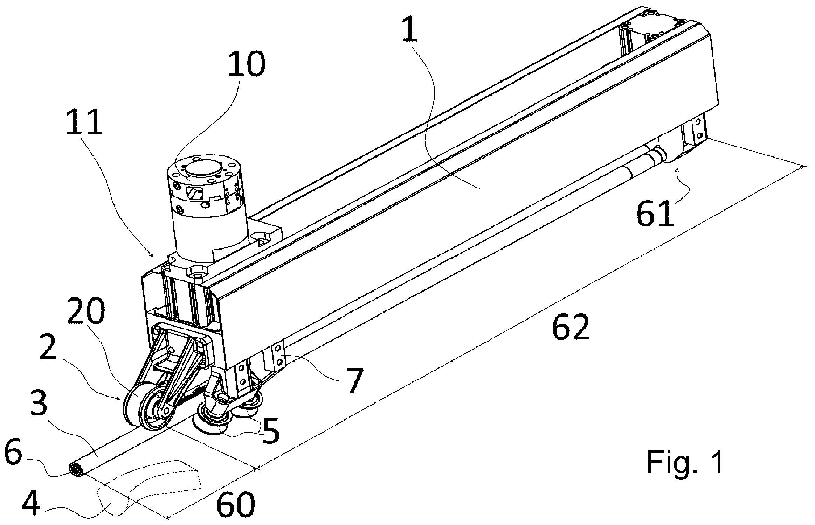

On the frame **1**, ideally at its front end **11**, is rotatably mounted an inserting pulley **2,** which serves to press the shaped plastic or rubber tube **3** into the labyrinth **4,** which is in Fig. 1 indicated only schematically by a weak dashed line. The inserting pulley **2** is associated by its pulley surface **20** with the guide mandrel **6,** ideally in the region of transition of the rigid (under normal conditions inflexible) rear portion **62** of the guide mandrel **6** into the elastic front end portion **60** of the guide mandrel **6.** The position and direction of the inserting pulley **2** and of the guide mandrel **6,** including the elastic front portion **60** of the guide mandrel **6,** relative to the labyrinth **4** is controlled by the 3D manipulator (not shown) of the frame **1** according to the control program performed by a control device of the 3D manipulator.

At least one pair of guide pulleys **5** are further mounted on the frame **1** along the sides of the guide mandrel **6** in the area between the inserting pulley **2** and the rear end **61** of the guide mandrel **6,** and so the guide mandrel **6,** as viewed from the front, passes through the space defined by the inserting pulley **2** and the guide pulleys **5,** which increases the stability of the attachment of the guide mandrel **6** at its rear end to the frame **1,** in fact the stability of overhung (free-end) mounting of the guide mandrel **6** on the frame **1,** which allows to guide the shaped tube **3** placed on the guide mandrel **6,** as will be described in more detail hereinafter.

In the illustrated embodiment, at least one auxiliary support **7** of the mandrel **6** and of the tube **3** is situated in the area between the guide pulleys **5** and the rear end **61** of the guide mandrel **6** mounted on the frame **1,** the auxiliary support **7** being particularly suited to large lengths of the mandrel **6** and the tube **3**. In an unillustrated exemplary embodiment, the device is implemented without the auxiliary support **7.**

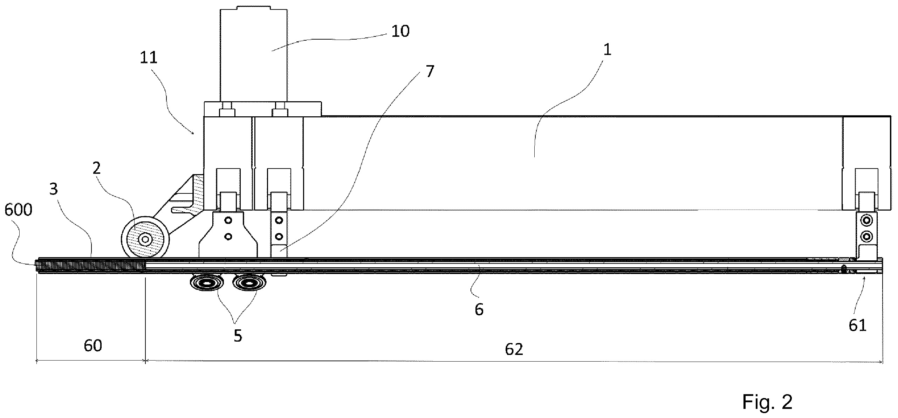

As shown in Figs. 2 to 4 and as previously mentioned, the guide mandrel **6** has an elastic front end portion **60.**

In the embodiment of Fig. 2, the elastic front end portion **60** of the guide mandrel **6** is formed by a cylindrical spring **600,** which is placed on the guide mandrel **6** along its entire length. The rigid rear portion **62** of the guide mandrel **6** has **a** smaller diameter and the cylindrical spring **600** is placed directly on it, whereby the front portion of the cylindrical spring **600** extends before the front end of the rigid rear portion **62** of the guide mandrel **6** and in the front portion of the cylindrical spring **600,** which is not put on the rigid rear portion **62** of the guide mandrel **6,** constitutes the elastic front end portion **60** of the guide mandrel **6,** whereby the front end of the elastic front portion is located at a distance before the inserting pulley **2,** as required by the bent tube **3.**

In an unillustrated embodiment, which is a modification of the embodiment of Fig. 2, the elastic front end portion **60** of the guide mandrel **6** is formed by a cylindrical spring **600,** which, at one end thereof, is secured to the front end of the rigid rear portion **62** of the guide mandrel **6,** whereby the rigid rear portion **62** of the guide mandrel **6** is free, i.e., it is not overlaid by the spring **600** or overlapped only on a limited length. The rigid rear portion **62** of the guide mandrel **6** has either a diameter of the inner diameter of the inserted shaped tube **3** or has a smaller diameter, which is advantageous to reduce the friction between the mandrel **6** and the tube **3** while the tube **3** is being inserted into the labyrinth **4.** In this embodiment, too, the cylindrical spring **600** is located with its front portion at a distance before the inserting pulley **2,** as required by the bent tube **3.**

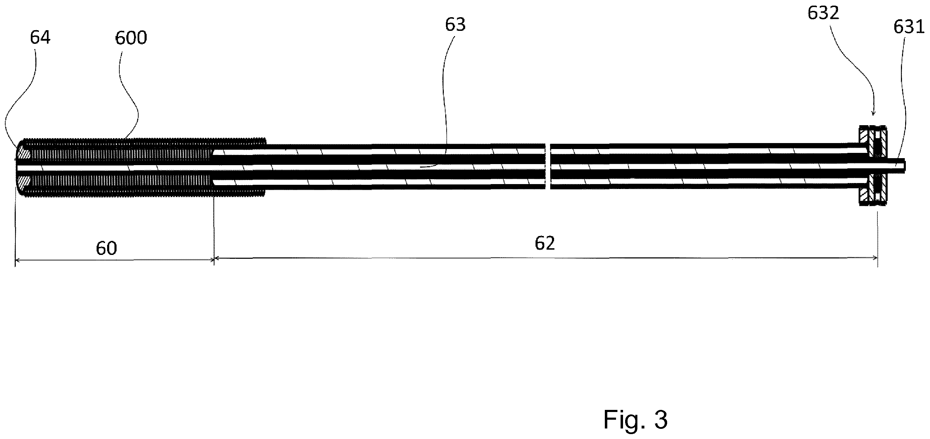

Fig. 3 shows an embodiment of the guide mandrel **6,** which comprises a hollow rigid rear portion **62,** to whose front end is attached a cylindrical spring **600** constituting a elastic front end portion **60** of the guide mandrel **6.** A resilient tensioning means **63,** such as a steel cable, passes through the cavity of the hollow rigid rear portion **62** of the guide mandrel **6** and through the cavity of the cylindrical spring **600.** The resilient tensioning means **63** is mounted at its front end **630** in the front disc **64,** whose rear side rests against the front end of the cylindrical spring **600.** The front side of the front disc **64** is adapted for receiving the tube **3.** The resilient tensioning means **63** is at its rear end **631** fastened to the rear end of the hollow rigid rear portion **62** of the guide mandrel **6,** for example by means of a suitable disc **632** or a system of discs. By tightening the resilient tensioning means **63,** for example, the compression of the cylindrical spring **600** can be affected, thereby adjusting the stiffness of the elastic front end portion **60** of the guide mandrel **6,** etc.

The insertion of the tube **3** into the labyrinth **4** starts with putting the entire tube **3** on the guide mandrel **6,** ideally as far as to its rear end **61.** Ideally, the length of the mandrel **6** corresponds to the length of the inserted tube **3.** Subsequently, the device approaches the front end of the labyrinth **4** and the front end of the tube **3** is clamped in the clamping device at the front end of the labyrinth **4.** Afterwards, the 3D device is moved in a controlled manner by the inserting pulley **2** along the labyrinth and the tube **3** is gradually pressed into the 3D shaping labyrinth **4** by the inserting pulley **2.** Simultaneously, the tube **3** is bent according to the shape of the labyrinth **4** and at the same time this bending of the tube is supported from the inside of the tube **3** by the elastic front end portion **60** of the guide mandrel **6,** which is along its length from the inserting pulley **2** towards the front end of the mandrel **6** bent as required and according to 3D shape of the labyrinth **4.** At the same time, the tube **3** gradually "slips" off the mandrel **6** as the insertion into the labyrinth **4** proceeds, while the elastic front end portion **60** of the guide mandrel **6** moves along with the inserting pulley **2** towards the end of the labyrinth **4** until the whole length of the tube **3** is inserted into the labyrinth **4.**

### Industrial applicability

The solution can be used especially for machine insertion of plastic or rubber tubes into shaping molds, such as labyrinths and similar 3D shaping tools.

## Claims

1. The guide mandrel (6) for machine insertion of plastic or rubber tubes into a shaping mold, which comprises a rigid rear portion (62) and a flexible front end portion, **characterized in that** the flexible front end portion is formed by an elastic front end portion (60), whereby the guide mandrel (6) is adapted to be mounted at its rear end (61) in a device for automatic insertion of plastic or rubber tubes into a shaping mold.

2. The guide mandrel according to claim 1, **characterized in that** the elastic front end portion (60) consists of a cylindrical spring (600) which is put on the guide mandrel (6) along its entire length, whereby the rigid rear portion (62) of the guide mandrel (6) has a smaller diameter and the cylindrical spring (600) is put on it, the front portion of the cylindrical spring (600) extending before the front end of the rigid rear portion (62) of the guide mandrel (6).

3. The guide mandrel according to claim 1, **characterized in that** the elastic front end portion (60) of the guide mandrel (6) consists of a cylindrical spring (600) which is by its rear end fastened to a part of the length of the front end of the rigid rear portion (62) of the guide mandrel (6) and whose front portion extends before the front end of the rigid rear portion (62) of the guide mandrel (6).

4. The guide mandrel according to claim 3, **characterized in that** the rigid rear portion (62) of the guide mandrel (6) has a smaller diameter than the inner diameter of the inserted tube (3) to be shaped.

5. The guide mandrel according to claim 1, **characterized in that** the guide mandrel (6) comprises a hollow rigid rear portion (62), to whose front end is fastened a cylindrical spring (600) constituting the elastic front end portion (60) of the guide mandrel (6), whereby through the hollow rigid rear portion (62) of the guide mandrel (6) and through the hollow of the cylindrical spring (600) passes a resilient tensioning means (63) which is at its front end (630) mounted in the front disc (64) whose rear side rests against the front end of the cylindrical spring (600), whereby the front side of the front disc (64) is adapted to put on the tube (3), and the resilient tensioning means (63) is further attached at its rear end (631) to the rear end of the hollow rigid rear portion (62) of the guide mandrel (6).

6. The device for automatic insertion of straight plastic or rubber tubes into a shaping mold, which comprises the guide mandrel according to any of the preceding claims and which further comprises a longitudinal frame (1) adapted to be attached to the end element of a 3D manipulator and means for inserting a tube (3) into a labyrinth (4), **characterized in that** on the frame (1) a guide mandrel (6) of the shaped tube (3) is at its rear end (61) adapted to put on the tube (3), whereby the guide mandrel (6) is provided with an elastic front end portion (60) adapted to maintain the presence of the mandrel (6) in the tube (3) at the bending point and to minimize the ovality of the bent tube (3), whereby the elastic front end portion (60) of the guide mandrel (6) is associated with an inserting pulley (2) mounted on the frame (1), whereby at least one pair of guide pulleys (5) are further mounted on the frame (1) along the sides of the guide mandrel (6) in the area between the inserting pulley (2) and a rear end (61) of the guide mandrel (6).

7. The device according to claim 6, **characterized in that** the inserting pulley is (2) by its pulley surface (20) associated with the mandrel (6) in the region of transition of the rigid rear portion (62) of the guide mandrel (6) into the elastic front end portion (60) of the guide mandrel (6).

8. The device according to claim 6 or 7, **characterized in that** at least one auxiliary support (7) of the guide mandrel (6) and of the tube (3) is situated in the area between the guide pulleys (5) and the rear end (61) of the guide mandrel (6).

9. The device according to any of claims 6 to 8, **characterized in that** the elastic front end portion (60) of the guide mandrel (6) is formed by the cylindrical spring (600), which is put on the guide mandrel (6) along its entire length, whereby the rigid rear portion (62) of the guide mandrel (6) has a smaller diameter and the cylindrical spring (600) is put on it with its front portion extending before the front end of the rigid rear portion (62) of the guide mandrel (6).

10. The device according to any of claims 6 to 8, **characterized in that** the elastic front end portion (60) of the guide mandrel (6) consists of the cylindrical spring (600) which is at its rear end fastened to a part of the length of the front end of the rigid rear portion (62) of the guide mandrel (6) and whose front portion extends before the front end of the rigid rear portion (62) of the guide mandrel (6).

11. The device according to claim 10, **characterized in that** the rigid rear portion (62) of the guide mandrel (6) has a smaller diameter than the inner diameter of the inserted tube (3) to be shaped.

12. The device according to any of claims 6 to 8, **characterized in that** the guide mandrel (6) comprises a hollow rigid rear portion (62) to whose front end is attached a cylindrical spring (600) constituting the elastic front end portion (60) of the guide mandrel (6), whereby through the cavity of the hollow rigid rear portion (62) of the guide mandrel (6) and through the cavity of the cylindrical spring (600) passes a resilient tensioning means (63), which is at its front end (630) fastened in a front disc (64), whose rear side rests against the front end of the cylindrical spring (600), whereby the front side of the front disc (64) is adapted for putting on the tube (3) and the resilient tensioning means (63) is further by its rear end (631) attached to the rear end of the hollow rigid rear portion (62) of the guide mandrel (6).

## Patentansprüche

1. Führungsdorn (6) zur maschinellen Einführung von Kunststoff- oder Gummirohren in eine Form, der einen festen hinteren Teil (62) und einen biegsamen vorderen Endteil aufweist, **dadurch gekennzeichnet, dass** der biegsame vordere Endteil durch einen flexiblen vorderen Endteil (60) gebildet wird, wobei der Führungsdorn (6) mit seinem hinteren Ende (61) zur Lagerung in der Einrichtung zur maschinellen Einführung von Kunststoff- oder Gummirohren in eine Form angepasst ist.

2. Führungsdorn nach dem Anspruch 1, **dadurch gekennzeichnet, dass** der flexible vordere Endteil (60) durch eine zylindrische Feder (600) gebildet wird, die auf der ganzen Länge des Führungsdornes (6) aufgezogen ist, dessen fester hinterer Teil (62) einen kleineren Durchmesser aufweist und darauf die zylindrische Feder (600) aufgezogen ist, deren vorderer Teil vor das vordere Ende des festen hinteren Teils (62) des Führungsdornes (6) überragt.

3. Führungsdorn nach dem Anspruch 1, **dadurch gekennzeichnet, dass** der flexible vordere Endteil (60) des Führungsdornes (6) durch eine zylindrische Feder (600) gebildet wird, die mit ihrem hinteren Ende auf einem Teil der Länge des vorderen Endes des festen hinteren Teils (62) des Führungsdornes (6) befestigt ist und deren vorderer Teil vor das vordere Ende des festen hinteren Teils (62) des Führungsdornes (6) überragt.

4. Führungsdorn nach dem Anspruch 3, **dadurch gekennzeichnet, dass** der feste hintere Teil (62) des Führungsdornes (6) einen kleineren Durchmesser aufweist, als der Innendurchmesser des einzulegenden, zu formenden Rohres (3) ist.

5. Führungsdorn nach dem Anspruch 1, **dadurch gekennzeichnet, dass** der Führungsdorn (6) einen hohlen festen hinteren Teil (62) aufweist, an dessen vorderem Ende eine zylindrische Feder (600) befestigt ist, die den flexiblen vorderen Endteil (60) des Führungsdornes (6) bildet, wobei durch den Hohlraum des hohlen festen hinteren Teils (62) des Führungsdornes (6) und den Hohlraum der zylindrischen Feder (600) ein biegsames Zugmittel (63) durchgeht, das mit seinem vorderen Ende (630) in einem vorderen Teller (64) befestigt ist, der sich mit seiner hinteren Seite auf das vordere Ende der zylindrischen Feder (600) stützt, wobei die vordere Seite des vorderen Tellers (64) zum Aufschieben des Rohres (3) angepasst ist und das biegsame Zugmittel (63) weiter mit seinem hinteren Ende (631) am hinteren Ende des hohlen festen hinteren Teils (62) des Führungsdornes (6) befestigt ist.

6. Einrichtung zum automatischen Einlegen von geraden Kunststoff- oder Gummirohren in eine Form, die einen Führungsdorn nach einem der vorangehenden Ansprüche aufweist, und die weiter einen Längsrahmen (1), der zur Aufnahme auf dem Endelement des 3D-Manipulators angepasst ist, und die Mittel zum Hineinlegen des Rohres (3) ins Labyrinth (4) aufweist, **dadurch gekennzeichnet, dass** auf dem Rahmen (1) mit seinem hinteren Ende (61) der Führungsdorn (6) des zu formenden Rohres (3) gelagert ist, der zum Aufziehen des Rohres (3) angepasst ist, wobei der Führungsdorn (6) einen flexiblen vorderen Endteil (60) aufweist, der zur Aufrechterhaltung der Anwesenheit des Dorns (6) im Rohr (3) in der Biegestelle und zur Minimierung der Unrundheit des zu biegenden Rohres (3) angepasst ist, wobei dem flexiblen vorderen Endteil (60) des Führungsdornes (6) eine Einlegerolle (2) zugeordnet ist, die auf dem Rahmen (1) gelagert ist, wobei dem Rahmen (1) weiter auf den Seiten des Führungsdornes (6) im Bereich zwischen der Einlegerolle (2) und dem hinteren Ende (61) des Führungsdornes (6) mindestens ein Paar der Führungsrollen (5) gelagert ist.

7. Einrichtung nach dem Anspruch 6, **dadurch gekennzeichnet, dass** die Einlegerolle (2) mit ihrer Rollenoberfläche (20) dem Führungsdorn (6) im Übergangsbereich des festen hinteren Teils (62) des Führungsdornes (6) in den flexiblen vorderen Endteil (60) des Führungsdornes (6) zugeordnet ist.

8. Einrichtung nach dem Anspruch 6 oder 7, **dadurch gekennzeichnet, dass** im Bereich zwischen den Führungsrollen (5) und dem hinteren Ende (61) des Führungsdornes (6) mindestens eine Hilfsstütze (7) des Führungsdornes (6) und des Rohres (3) situiert ist.

9. Einrichtung nach einem der Ansprüche 6 bis 8, **dadurch gekennzeichnet, dass** der flexible vordere Endteil (60) des Führungsdornes (6) durch eine zylindrische Feder (600) gebildet wird, die auf der ganzen Länge des Führungsdornes (6) aufgezogen ist, dessen fester hinterer Teil (62) einen kleineren Durchmesser aufweist und darauf eine zylindrische Feder (600) aufgezogen ist, deren vorderer Teil vor das vordere Ende des festen hinteren Teils (62) des Führungsdornes (6) überragt.

10. Einrichtung nach einem der Ansprüche 6 bis 8, **dadurch gekennzeichnet, dass** der flexible vordere Endteil (60) des Führungsdornes (6) durch eine zylindrische Feder (600) gebildet wird, die mit ihrem hinteren Ende auf dem Teil der Länge des vorderen Endes des festen hinteren Teils (62) des Führungsdornes (6) befestigt ist und deren vorderer Teil vor das vordere Ende des festen hinteren Teils (62) des Führungsdornes (6) überragt.

11. Einrichtung nach dem Anspruch 10, **dadurch gekennzeichnet, dass** der feste hintere Teil (62) des Führungsdornes (6) einen kleineren Durchmesser aufweist, als der Innendurchmesser des einzulegenden, zu formenden Rohres (3) ist.

12. Einrichtung nach einem der Ansprüche 6 bis 8, **dadurch gekennzeichnet, dass** der Führungsdorn (6) einen hohlen festen hinteren Teil (62) aufweist, an dessen vorderem Ende eine zylindrische Feder (600) befestigt ist, die den flexiblen vorderen Endteil (60) des Führungsdornes (6) bildet, wobei durch den Hohlraum des hohlen festen hinteren Teils (62) des Führungsdornes (6) und den Hohlraum der zylindrischen Feder (600) ein biegsames Zugmittel (63) durchgeht, das mit seinem vorderen Ende (630) in einem vorderen Teller (64) befestigt ist, der sich mit seiner hinteren Seite auf das vordere Ende der zylindrischen Feder (600) stützt, wobei die vordere Seite des vorderen Tellers (64) zum Aufschieben des Rohres (3) angepasst ist und das biegsame Zugmittel (63) weiter mit seinem hinteren Ende (631) am hinteren Ende des hohlen festen hinteren Teils (62) des Führungsdornes (6) befestigt ist.

## Revendications

1. Mandrin de guidage (6) pour l'insertion mécanique de tubes en plastique ou en caoutchouc dans un moule, comprenant une partie d'extrémité arrière fixe (62) et une partie d'extrémité avant souple, **caractérisé en ce que** la partie d'extrémité avant souple comprend une partie d'extrémité avant flexible (60), tandis que le mandrin de guidage (6) est adapté par sa partie d'extrémité arrière (61) pour être logé dans un dispositif pour l'insertion mécanique de tubes en plastique ou en caoutchouc dans un moule.

2. Mandrin de guidage selon la revendication 1, **caractérisé en ce que** la partie d'extrémité avant flexible (60) comprend un ressort cylindrique (600) qui est enfilé sur toute la longueur du mandrin de guidage (6), dont la partie d'extrémité arrière fixe (62) a un diamètre inférieur et est recouverte d'un ressort cylindrique (600) dont la partie d'extrémité avant dépasse le bout avant de la partie d'extrémité arrière fixe (62) du mandrin de guidage (6).

3. Mandrin de guidage selon la revendication 1, **caractérisé en ce que** la partie d'extrémité avant flexible (60) du mandrin de guidage (6) comprend un ressort cylindrique (600), qui est fixé par son extrémité arrière à une partie de la longueur de l'extrémité avant de la partie arrière fixe (62) du mandrin de guidage (6), et dont l'extrémité avant dépasse le bout avant de la partie arrière fixe (62) du mandrin de guidage (6).

4. Mandrin de guidage selon la revendication 3, **caractérisé en ce que** la partie arrière fixe (62) du mandrin de guidage (6) a un diamètre inférieur au diamètre intérieur du tube cintré chargé (3).

5. Mandrin de guidage selon la revendication 1, **caractérisé en ce que** le mandrin de guidage (6) comprend une partie arrière fixe creuse (62), à laquelle est fixé, au niveau de son extrémité avant, un ressort cylindrique (600) qui forme la partie d'extrémité avant flexible (60) du mandrin de guidage (6), tandis qu'un moyen de traction souple (63) traverse la partie arrière fixe creuse (62) du mandrin de guidage (6) et la cavité du ressort cylindrique (600) ; le moyen est fixé au niveau de son extrémité avant (630) dans un disque avant (64) dont le côté arrière repose sur l'extrémité avant du ressort cylindrique (600), tandis que l'extrémité avant du disque avant (64) est adaptée pour le passage du tube (3), et le moyen de traction souple (63) est en outre fixé à son extrémité arrière (631) à l'extrémité arrière de la partie arrière fixe creuse (62) du mandrin de guidage (6).

6. Dispositif pour insertion automatique de tubes droits en plastique ou en caoutchouc dans un moule, équipé d'un mandrin de guidage selon l'une des revendications précédentes, d'un cadre longitudinal (1) adapté pour être monté sur l'élément d'extrémité du manipulateur 3D et des moyens qui permettent d'insérer le tube (3) dans le labyrinthe (4), **caractérisé en ce que** le cadre (1) comprend, à son extrémité arrière (61), un mandrin de guidage (6) du tube moulé (3) adapté pour enfiler le tube (3), tandis que le mandrin de guidage (6) est pourvu d'une partie d'extrémité avant flexible (60), qui permet de maintenir la présence du mandrin (6) dans le tube (3) au point de cintrage et de minimiser l'ovalité du tube cintré (3), tandis que la partie d'extrémité avant flexible (60) du mandrin de guidage (6) est associée à une poulie de chargement (2) montée sur le cadre (1), tandis que le cadre (1) est en outre pourvu d'au moins une paire de poulies de guidage (5) sur les côtés du mandrin de guidage (6) dans la zone entre la poulie de chargement (2) et l'extrémité arrière (61) du mandrin de guidage (6).

7. Dispositif selon la revendication 6, **caractérisé en ce que** la poulie de chargement (2) est fixée par sa surface de poulie (20) au mandrin de guidage (6) dans la partie de transition de la partie arrière fixe (62) du mandrin de guidage (6) à la partie d'extrémité avant flexible (60) du mandrin de guidage (6).

8. Dispositif selon la revendication 6 ou 7, **caractérisé en ce qu'**au moins un support auxiliaire (7) du mandrin de guidage (6) et du tube (3) est situé dans la partie entre les poulies de guidage (5) et l'extrémité arrière (61) du mandrin de guidage (6).

9. Dispositif selon l'une des revendications de 6 à 8, **caractérisé en ce que** la partie d'extrémité avant flexible (60) du mandrin de guidage (6) comprend un ressort cylindrique (600) qui est enfilé sur toute la longueur du mandrin de guidage (6), dont la partie d'extrémité arrière fixe (62) a un diamètre inférieur et est recouverte d'un ressort cylindrique (600), dont la partie d'extrémité avant s'étend devant l'extrémité avant de la partie d'extrémité arrière fixe (62) du mandrin de guidage (6).

10. Dispositif selon l'une des revendications de 6 à 8, **caractérisé en ce que** la partie d'extrémité avant flexible (60) du mandrin de guidage (6) comprend un ressort cylindrique (600) fixé à son extrémité arrière à une partie de la longueur de l'extrémité avant de la partie arrière fixe (62) du mandrin de guidage (6), et dont la partie avant dépasse l'extrémité avant de la partie arrière fixe (62) du mandrin de guidage (6).

11. Dispositif selon la revendication 10, **caractérisé en ce que** la partie arrière fixe (62) du mandrin de guidage (6) a un diamètre inférieur au diamètre intérieur du tube cintré chargé (3).

12. Dispositif selon l'une des revendications de 6 à 8, **caractérisé en ce que** le mandrin de guidage (6) comprend une partie arrière fixe creuse (62), à l'extrémité avant de laquelle est fixé un ressort cylindrique (600) formant une partie d'extrémité avant flexible (60) du mandrin de guidage (6), tandis qu'un moyen de traction souple (63) traverse la partie arrière fixe creuse (62) du mandrin de guidage (6) et la cavité du ressort cylindrique (600), qui est fixé à son extrémité avant (630) dans un disque avant (64) qui repose au niveau de son extrémité arrière contre l'extrémité avant du ressort cylindrique (600), l'extrémité avant (64) étant adaptée pour l'insertion du tube (3) et le moyen de traction souple (63) étant en outre fixé à son extrémité arrière (631) à l'extrémité arrière de la partie arrière fixe creuse (62) du mandrin de guidage (6).
